# EUROPEAN PATENT APPLICATION

(11) **EP 4 418 345 A1**
(43) Date of publication of application: **21.08.2024**
(21) Application number: 21943329.9
(22) Date of filing: 28.12.2021
(51) Int. Cl.: H01M 4/133, H01M 10/0525

(54) **SECONDARY BATTERY AND ELECTRIC APPARATUS CONTAINING SAME**

(71) Applicant: Contemporary Amperex Technology Co., Limited, Ningde, Fujian 352100 (CN)
(72) Inventor: WANG, Hong, Ningde, Fujian 352100 (CN); YAO, Bin, Ningde, Fujian 352100 (CN); HUANG, Ying, Ningde, Fujian 352100 (CN); LIU, Jiang, Ningde, Fujian 352100 (CN)
(74) Representative: Thoma, Michael
(86) International application number: PCT/CN2021/142088
(87) International publication number: WO 2023/122958

(57) **Abstract**

Embodiments of this application provide a secondary battery and an electric apparatus containing the same. This application provides a secondary battery, including a negative electrode plate, where the negative electrode plate includes: a negative electrode current collector; a first negative electrode film layer disposed on at least one surface of the negative electrode current collector, where the first negative electrode film layer includes a first negative electrode active material and a first conductive polymer, a mass percentage of the first conductive polymer in the first negative electrode film layer is recorded as A, and A≤6%; and a second negative electrode film layer disposed on a surface of the first negative electrode film layer, where the second negative electrode film layer includes a second negative electrode active material and a second conductive polymer, and a mass percentage of the second conductive polymer in the second negative electrode film layer is recorded as B; where the negative electrode plate satisfies A>B. The secondary battery has both good maximum charging rate and long cycle life.

## Description

### TECHNICAL FIELD

This application relates to the field of battery technologies, and in particular, to a secondary battery and an electric apparatus containing the same.

### BACKGROUND

In recent years, lithium-ion batteries have been used in an increasingly wide range of application. For example, the lithium-ion batteries are widely used in energy storage power supply systems such as hydroelectric power plants, thermal power plants, wind power plants, and solar power plants, and many other fields including electric tools, electric bicycles, electric motorcycles, electric vehicles, military equipment, and aerospace. The wide application of lithium-ion batteries leads to a growing requirement for overall performance of batteries. More and more application scenarios require traction batteries to have both high energy density and good charge/discharge performance.

The design of negative electrodes, as one of the most important components of lithium-ion batteries, directly affects the performance of the batteries, especially the charge-related performance of the batteries. A common challenge in the industry is how the design of negative electrode plates is optimized to obtain batteries with both high energy density and good kinetic performance.

In view of this, it is necessary to provide a secondary battery capable of resolving the foregoing problems.

### SUMMARY

In view of deficiencies of the prior art, this application is intended to provide a secondary battery, a preparation method thereof, and an apparatus containing the secondary battery to increase a maximum charging rate and prolong cycle life of the secondary battery.

The inventors of this application have found that the prior-art problem of poor kinetic performance of the negative electrode plate caused by different polarization degrees of the conductive polymer in a thickness direction of the thick electrode can be resolved by applying a conductive polymer on the negative electrode. When the negative electrode plate is prepared using the technical solution of the present invention, the cell has sufficient kinetics, the slurry active substance loading is maximized, the cost of auxiliary materials is minimized, and the maximum charging rate is increased and cycle life of the secondary battery is prolonged.

To achieve the foregoing objectives, a first aspect of this application provides a secondary battery, including a negative electrode plate, where the negative electrode plate includes: a negative electrode current collector; a first negative electrode film layer disposed on at least one surface of the negative electrode current collector, where the first negative electrode film layer includes a first negative electrode active material and a first conductive polymer, a mass percentage of the first conductive polymer in the first negative electrode film layer is recorded as A, and A≤6%; and a second negative electrode film layer disposed on a surface of the first negative electrode film layer, where the second negative electrode film layer includes a second negative electrode active material and a second conductive polymer, a mass percentage of the second conductive polymer in the second negative electrode film layer is recorded as B; where the negative electrode plate satisfies A>B.

A second aspect of this application provides a preparation method of secondary battery, including preparing a negative electrode plate of the secondary battery according to the following steps:
(1) forming a first negative electrode film layer including a first negative electrode active material on at least one surface of a negative electrode current collector; and
(2) forming a second negative electrode film layer including a second negative electrode active material on the first negative electrode film layer;
where the first negative electrode film layer includes the first negative electrode active material and a first conductive polymer, a mass percentage of the first conductive polymer in the first negative electrode film layer is recorded as A, and A≤6%; and the second negative electrode film layer includes the second negative electrode active material and a second conductive polymer, and a mass percentage of the second conductive polymer in the second negative electrode film layer is recorded as B; where A>B.

A third aspect of this application provides an apparatus, containing the secondary battery in the first aspect of this application or the secondary battery prepared by using the method in the second aspect of this application.

Compared with the prior art, this application includes at least the following beneficial effects:

The negative electrode plate of the secondary battery in this application is a multi-coating structure, with amounts of the conductive polymer controlled to be different in each coating layer, so that the cell has sufficient kinetics, slurry active substance loading is maximized, and the cost of auxiliary materials is minimized, allowing the secondary battery to have both good maximum charging rate and long cycle life. The apparatus of this application contains the secondary battery provided in this application, and therefore has at least the same advantages as the secondary battery.

### BRIEF DESCRIPTION OF DRAWINGS

To describe the technical solutions in the examples of this application more clearly, the following briefly describes the accompanying drawings required for describing the examples of this application. Apparently, the accompanying drawings in the following descriptions show merely some examples of this application, and persons of ordinary skill in the art may still derive other drawings from the accompanying drawings without creative efforts.
FIG 1 is a schematic diagram of an embodiment of a secondary battery according to this application.
FIG 2 is a schematic exploded view of an embodiment of a secondary battery according to this application.
FIG 3 is a schematic diagram of an embodiment of a battery module according to this application.
FIG 4 is a schematic diagram of an embodiment of a battery pack according to this application.
FIG 5 is an exploded view of FIG 4.
FIG 6 is a schematic diagram of an embodiment of an electric apparatus using a secondary battery of this application as a power source.

### DESCRIPTION OF EMBODIMENTS

The following further describes this application with reference to specific embodiments. It should be understood that these specific embodiments are merely intended to illustrate this application but not to limit the scope of this application.

For brevity, this specification specifically discloses only some numerical ranges. However, any lower limit may be combined with any upper limit to form a range not expressly recorded; any lower limit may be combined with any other lower limit to form a range not expressly recorded; and any upper limit may be combined with any other upper limit to form a range not expressly recorded. In addition, each individually disclosed point or single numerical value, as a lower limit or an upper limit, may be combined with any other point or single numerical value or combined with another lower limit or upper limit to form an unspecified range.

In the descriptions of this specification, it should be noted that "more than" or "less than" is inclusive of the present number and that "more" in "one or more" means two or more than two, unless otherwise specified.

Unless otherwise specified, the terms used in this application have well known meanings generally understood by persons skilled in the art. Unless otherwise specified, numerical values of parameters mentioned in this application may be measured by using various measurement methods commonly used in the art (for example, testing may be performed by using a method provided in the embodiments of this application).

### Secondary battery

A first aspect of this application provides a secondary battery. The secondary battery includes a positive electrode plate, a negative electrode plate, and an electrolyte. In a charge and discharge process of the battery, active ions are intercalated and deintercalated between the positive electrode plate and the negative electrode plate. The electrolyte conducts ions between the positive electrode plate and the negative electrode plate.

### [Negative electrode plate]

The design of negative electrodes which are one of the most important components of lithium-ion batteries directly affects the performance of the batteries. Currently, conductive polymers are widely used for coating modification of the positive and negative electrode materials in lithium-ion batteries to improve the electrochemical performance of the batteries. The conductive polymer is applied onto a surface of the negative electrode to mitigate lithium precipitation and used as a negative electrode binder to improve rate performance of the cell. However, the introduction of the conductive polymer decreases the proportion of active substances, causing the cell capacity and energy density in the same housing to decrease. In addition, the process cost of applying the conductive polymer on the surface of the negative electrode material is high, and thickness and uniformity of the coating layer cannot be guaranteed. As a result, the negative electrode powder has poor consistency and cannot be mass produced. Moreover, the conductive polymer as a surface coating layer mostly uses organic free radical groups as side chains and conjugated structure polymers as main chains, so that the conductivity of a synthesized polymer coating layer is low, further reducing the actual specific capacity and energy density of the battery.

To solve the foregoing problems, the inventors have carried out a lot of researches and provided a negative electrode plate. Specifically, the negative electrode plate in the secondary battery of this application includes: a negative electrode current collector; a first negative electrode film layer disposed on at least one surface of the negative electrode current collector, where the first negative electrode film layer includes a first negative electrode active material and a first conductive polymer, a mass percentage of the first conductive polymer in the first negative electrode film layer is recorded as A, and A≤6%; and a second negative electrode film layer disposed on a surface of the first negative electrode film layer, where the second negative electrode film layer includes a second negative electrode active material and a second conductive polymer, and a mass percentage of the second conductive polymer in the second negative electrode film layer is recorded as B; where the negative electrode plate satisfies A>B.

The inventors have found through researches that when the negative electrode plate satisfies the foregoing design conditions, the problem of insufficient kinetics caused by different polarization degrees of a thick-coating electrode in a thickness direction can be solved, so that the cell has sufficient kinetics, slurry active substance loading is maximized and the cost of auxiliary materials is minimized, allowing the secondary battery to have both good maximum charging rate and long cycle life.

In some preferred embodiments, a mass percentage A of the first conductive polymer in the first negative electrode film layer satisfies 1%≤A≤5%. For example, A may satisfy 1.2%≤A≤4%, 1%≤A≤3%, 1.5%≤A≤4%, 2%≤A≤4%, 2%≤A≤3%, or the like.

In some preferred embodiments, a mass percentage B of the second conductive polymer in the second negative electrode film layer satisfies B≤4%, and optionally 0.2%≤B≤3%. For example, B may satisfy 0.5%<B<3%, 1.0%<B<3%, 1.5%B≤3%, 1.5%≤B≤2%, or the like.

The inventors have found through in-depth researches that when the negative electrode active material and the negative electrode film layer of this application satisfy the foregoing design conditions and optionally satisfy one or more of the following parameters, performance of the secondary battery can be further improved.

In some preferred embodiments, a mass percentage A of the first conductive polymer in the first negative electrode film layer and a mass percentage B of the second conductive polymer in the second negative electrode film layer satisfy A/B≤10, and optionally A/B≤5.

In some preferred embodiments, the first conductive polymer and the second conductive polymer are each independently selected from one or more of polyaniline (PANI), polypyrrole (PPy), polythiophene (PTPh) and derivatives thereof, poly(3,4-ethylenedioxythiophene) (PEDOT), polyacetylene, polyphenylene, and polyphenylacetylene.

In some preferred embodiments, the first active material and the second negative electrode active material both include artificial graphite.

In some preferred embodiments, a median particle size by volume Dᵥ50 of the first negative electrode active material is greater than a median particle size by volume Dᵥ50 of the second negative electrode active material. When the particle size by volume Dᵥ50 of the first negative electrode active material is greater than the particle size by volume Dᵥ50 of the second negative electrode active material, this matches better with the concentration gradient distribution of active ions in a charge and discharge process of the battery and can effectively increase the maximum charging rate of the battery. Moreover, the first negative electrode active material has a larger particle size and can provide more vacancies for receiving active ions, that is, having a large gram capacity, which helps to increase mass energy density of the battery. In addition, the second negative electrode active material has a smaller particle size and more sites for binder to attach on its surface, so that particles are less broken during cold pressing, and the material is less likely to generate new surfaces, thereby presenting a good electron conductivity in the charge and discharge process of the battery and effectively inhibiting the "broken bridge" phenomenon of electrolyte to further prolong the cycle life of the battery.

In some preferred embodiments, the median particle size by volume Dᵥ50 of the first negative electrode active material is 6 µm to 15 µm, and optionally 8 µm to 12 µm; and/or
the median particle size by volume Dᵥ50 of the second negative electrode active material is 0.5 µm to 8 µm, and optionally 4 µm to 6 µm.

In some preferred embodiments, a specific surface area (SSA) of the first negative electrode active material is less than a specific surface area (SSA) of the second negative electrode active material. When the specific surface area (SSA) of the first negative electrode active material is less than the specific surface area (SSA) of the second negative electrode active material, the maximum charging rate can be further increased and cycle life of the battery can be further prolonged.

In some preferred embodiments, the specific surface area (SSA) of the first negative electrode active material is 0.5 m²/g to 2 m²/g, and optionally 1 m²/g to 1.5 m²/g; and/or
the specific surface area (SSA) of the second negative electrode active material is 1.5 m²/g to 5 m²/g, and optionally 2 m²/g to 3 m²/g.

In some preferred embodiments, an OI value of the first negative electrode active material is greater than an OI value of the second negative electrode active material. When the OI value of the first negative electrode active material is greater than the OI value of the second negative electrode active material, the maximum charging rate can be further increased and cycle life of the battery can be further prolonged.

In some preferred embodiments, the OI value of the first negative electrode active material is 4 to 20, and optionally 5 to 10; and/or
the OI value of the second negative electrode active material is 0.5 to 10, and optionally 1 to 4.

In some preferred embodiments, a thickness of the first negative electrode film layer is recorded as H1, a thickness of the second negative electrode film layer is recorded as H2, and the secondary battery satisfies 0.5≤H1/H2≤3, and optionally 0.8≤H1/H2≤1.5.

In some preferred embodiments, the thickness of the first negative electrode film layer is recorded as H1, and 20 µm≤H1≤110 µm; and/or
the thickness of the second negative electrode film layer is recorded as H2, and 20 µm≤H2≤110 µm.

In some preferred embodiments, the first negative electrode active material and/or the second negative electrode active material further includes one or more of natural graphite, hard carbon, and silicon-based material.

In any embodiment of the present invention, the active substance layer may alternatively be provided in a quantity of three, four, five, or more, with each layer containing a different amount of conductive polymer. This can be understood by those skilled in the art, and details are not described herein.

In this application, a category of the conductive polymer can be determined by using a method well known in the art. For example, infrared spectrum of a material can be tested to determine characteristic peaks that the material contains, so as to determine the category of the conductive polymer. Specifically, an infrared spectrum analysis may be performed on the organic particles by using an instrument and a method well known in the art, such as an infrared spectrometer. For example, an IS10 fourier transform infrared spectrometer from Nicolet (nicolet) of the United States is used for the test in accordance with GB/T6040-2002 general rules for infrared analysis. Optionally, an X-ray photoelectron spectroscopy (XPS) may be used for determining a substance category in accordance with ISO 16531-2013/ISO 16243-2011 measurement method.

Further, amount of the conductive polymer can be determined by using a method well known in the art. For example, surface element analysis (EDS) can be performed to determine amount of conductive polymer characteristic elements, such as element N, in accordance with GB/T 25189-2010/ASTM E1508-1998(2008) measurement method. Characteristic elements at different layers vary greatly.

In this application, Dᵥ50 of the negative electrode active material has meanings well known in the art and can be measured by using a method known in the art. For example, a test may be carried out in accordance with the standard GB/T 19077.1-2016 by using a laser particle size analyzer (for example, Malvern Master Size 3000).

Definition of Dᵥ50 is as follows:
Dᵥ50 is a particle size where the cumulative distribution by volume of the negative electrode active material reaches 50%.

In this application, the specific surface area (Specific surface area, SSA) of the negative electrode active material has a meaning well known in the art and can be measured by using a method known in the art. For example, the specific surface area can be measured in accordance with GB/T 19587-2017 by using the nitrogen adsorption specific surface area analysis test method and calculated by using the BET (Brunauer Emmett Teller) method. The nitrogen adsorption specific surface area analysis test may be carried out by using the Tri-Star 3020 specific surface area and pore size analyzer from Micromeritics company in the USA.

In this application, an OI value of the negative electrode active material is C₀₀₄/C₁₁₀, where C₀₀₄ is the peak area of the 004 crystal plane diffraction peak of the negative electrode active material, and C₁₁ is the peak area of the 110 crystal plane diffraction peak of the negative electrode active substance material. In the test, X-ray diffraction analysis can be performed in accordance with JISK 0131-1996, and an X-ray diffractometer (for example, Bruker D8 Discover X-ray diffractometer) is used for the test. In the X-ray diffraction analysis test, a copper target may be used as an anode target, and a 0.02 mm-thick Ni filter is used to filter CuK_{β}, with CuK_{α} rays as a radiation source, a ray wavelength λ of 1.5418Å (weighted average of Kₐ₁ and Kₐ₂), a scanning 2θ angle range of 20° to 80°, and a scanning rate of 4°/min. In this application, specifically, a method for measuring the OI value of the negative electrode active material is as follows: directly placing the negative electrode active material in the X-ray diffractometer, performing X-ray diffraction analysis to obtain the peak area C₀₀₄ of the 004 crystal plane diffraction peak and the peak area C₁₁₀ of the 110 crystal plane diffraction peak, and calculating the OI value according to C₀₀₄/C₁₁₀.

Generally, in a case that the negative electrode active layer material is artificial graphite, the 2θ angle corresponding to the 004 crystal plane of the artificial graphite is 53.5° to 55.5° (for example, 54.5°), and the 2θ angle corresponding to the 110 crystal plane of the artificial graphite is 76.5° to 78.5° (for example, 77.4°).

In this application, the thickness of the negative electrode film layer may be measured with a ten-thousandths micrometer. For example, a ten-thousandths micrometer of model Mitutoyo293-100 with 0.1 µm resolution may be used.

In this application, respective thicknesses of the first negative electrode film layer and the second negative electrode film layer can be measured by using a scanning electron microscope (for example, ZEISS Sigma300). In an example, the test method may be as follows: first, cutting the negative electrode plate into to-be-tested samples with a specified size (for example, 2 cm×2 cm), and fixing the negative electrode plate on a sample stage by paraffin; and then loading the sample stage into a sample holder and locking the sample stage in place, powering on an argon ion cross-section polisher (for example, IB-19500CP) and evacuating the polisher (for example, 10-4 Pa), setting the argon flow (for example, 0.15 MPa), voltage (for example, 8 KV) and polishing time (for example, 2 hours), and adjusting the sample stage to rocking mode to start polishing. The sample test may be carried out in accordance with JY/T010-1996. To ensure accuracy of the test results, a plurality of (for example, 10) different regions in a sample under test may be randomly selected for the scanning test, and with a specified magnification (for example, 500 times), respective thicknesses of the first negative electrode film layer and the second negative electrode film layer in the test regions are read from the scale, and average values of the test results of the test regions are taken as the average thicknesses of the first negative electrode film layer and the second negative electrode film layer.

It should be noted that for testing of the foregoing parameters of the negative electrode active material, samples may be taken before coating or may be taken from the cold-pressed negative electrode film layer.

For example, when the foregoing samples are taken from the cold-pressed negative electrode film layer, a sample may be obtained by performing the following steps:
(1) A cold-pressed negative electrode film layer is randomly selected for taking a sample of second negative electrode active material (scraping powder as a sample using a blade), with a scraping depth not exceeding a boundary area between the first negative electrode film layer and the second negative electrode film layer.
(2) A sample of first negative electrode active material is taken. During cold pressing of the negative electrode film layer, an intermixing layer may be present in the boundary area between the first negative electrode film layer and the second negative electrode film layer (that is, both the first active material and the second active material exist in the intermixing layer). For the accuracy of the test, when the sample of first negative electrode active material is being taken, the intermixing layer can be scraped off first, and then a powder sample can be scraped from the first negative electrode active material.
(3) The first negative electrode active material and second negative electrode active material collected are separately placed in deionized water, followed by suction filtration and drying, and the dried negative electrode active materials are sintered at a specified temperature and time (for example, 400°C, 2h) to remove binder and conductive carbon, so that the test samples of first negative electrode active material and second negative electrode active material are obtained.

In the foregoing sampling process, an optical microscope or a scanning electron microscope can be used to assist in determining the position of the boundary area between the first negative electrode film layer and the second negative electrode film layer.

The negative electrode active materials used in this application are all commercially available.

In the secondary battery of this application, the negative electrode film layer may be disposed on one surface of the negative electrode current collector or on both surfaces of the negative electrode current collector.

The negative electrode active materials used in this application are all commercially available.

In the secondary battery of this application, the negative electrode film layer may be disposed on one surface of the negative electrode current collector or on both surfaces of the negative electrode current collector.

In addition, the negative electrode plate of this application does not exclude additional functional layers other than the negative electrode film layer. For example, in some embodiments, the negative electrode plate of this application may further include a conductive primer layer (which is, for example, formed by a conductive agent and a binder) disposed between the negative electrode current collector and the second negative electrode film layer. In some other embodiments, the negative electrode plate of this application further includes a protection layer covering the surface of the first negative electrode film layer.

It should be noted that the parameters of the negative electrode film layers (for example, film layer thickness, surface density, and compacted density) provided in this application are all refer to the film layer on one surface. In a case that the negative electrode film layer is disposed on both surfaces of the negative electrode current collector, the negative electrode film layer is considered to fall within the protection scope of this application, as long as parameters of the film layer on any one of the surfaces satisfy this application. In addition, ranges of the film layer thickness, surface density, and the like in this application all refer to parameters of a cold-pressed film layer used for assembling the battery.

In the secondary battery of this application, the negative electrode current collector may be a conventional metal foil or a composite current collector (a composite current collector may be formed by providing a metal material on a polymer matrix). In an example, the negative electrode current collector may be a copper foil.

In the secondary battery of this application, the first negative electrode film layer and/or the second negative electrode film layer usually includes the negative electrode active material, an optional binder, an optional conductive agent, and other optional additives, and is usually formed by a negative electrode film layer slurry applied as a coating and dried. The negative electrode film layer slurry is usually formed by dispersing the negative electrode active material and the optional conductive agent, binder, and other additives in a solvent and stirring them uniformly. The solvent may be, for example, N-methylpyrrolidone (NMP) or deionized water. The other optional additives may be, for example, a thickening agent and a dispersing agent (such as sodium carboxymethyl cellulose CMC-Na) and a PTC thermistor material.

In an example, the conductive agent may include one or more of superconducting carbon, acetylene black, carbon black, Ketjen black, carbon dots, carbon nanotubes, graphene, and carbon nanofibers.

In an example, the binder may include one or more of styrene-butadiene rubber (SBR), water-borne acrylic resin (water-based acrylic resin), polyvinylidene fluoride (PVDF), polytetrafluoroethylene (PTFE), ethylene vinyl acetate (EVA), polyvinyl alcohol (PVA), and polyvinyl butyral (PVB).

In the secondary battery of this application, in addition to the foregoing negative electrode active materials of this application, the first negative electrode active material and/or the second negative electrode active material further optionally includes a specific amount of other common negative electrode active materials, for example, one or more of soft carbon, hard carbon, silicon-based material, tin-based material, and lithium titanate. The silicon-based material may be selected from one or more of elemental silicon, a silicon-oxygen compound, a silicon-carbon composite, and silicon alloy. The tin-based material may be selected from one or more of elemental tin, a tin-oxygen compound, and tin alloy. Preparation methods of these materials are well known and are available commercially. A person skilled in the art can make proper selection based on an actual use environment.

In the secondary battery of this application, the negative electrode plate does not exclude additional functional layers other than the foregoing negative electrode film layer. For example, in some embodiments, the negative electrode plate of this application may further include a conductive layer (which is, for example, formed by a conductive agent and a binder) disposed between the negative electrode current collector and a first film layer. In some other embodiments, the negative electrode plate of this application may further include a protection layer disposed on a surface of a second film layer.

### [Positive electrode plate]

In the secondary battery of this application, the positive electrode plate includes a positive electrode current collector and a positive electrode film layer that is provided on at least one surface of the positive electrode current collector and that includes a positive electrode active material.

It can be understood that the positive electrode current collector has two opposite surfaces in its thickness direction, and the positive electrode film layer can be provided on either or both of the two opposite surfaces of the positive electrode current collector.

In the secondary battery of this application, the positive electrode current collector may be a conventional metal foil or a composite current collector (a composite current collector may be formed by providing a metal material on a polymer matrix). In an example, the positive electrode current collector may be an aluminum foil.

In the secondary battery of this application, the positive electrode active material may be a well-known positive electrode active material used for secondary batteries in the art. For example, the positive electrode active material may include one or more of lithium-containing transition metal oxide, lithium-containing phosphate with olivine-type structure, and respective modified compounds thereof. Examples of the lithium transition metal oxide may include but are not limited to one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and their modified compounds. Examples of the olivine-structured lithium-containing phosphate may include but are not limited to one or more of lithium iron phosphate, composite materials of lithium iron phosphate and carbon, lithium manganese phosphate, composite materials of lithium manganese phosphate and carbon, lithium manganese iron phosphate, composite materials of lithium manganese iron phosphate and carbon, and modified compounds thereof. This application is not limited to these materials, and other conventionally well-known materials that can be used as a positive electrode active material for secondary batteries may also be used.

In some preferred embodiments, to further increase the energy density of the battery, the positive electrode active material may include one or more of lithium transition metal composite oxides shown in formula 1 and modified compounds thereof:

LiₐNi_{b}Co_{c}M_{d}OₑA_{f} Formula 1

In formula 1, 0.8≤a≤1.2, 0.5≤b<1, 0<c<1, 0<d<1, 1≤e≤2, 0≤f≤1, M is selected from one or more of Mn, Al, Zr, Zn, Cu, Cr, Mg, Fe, V, Ti, and B, and A is selected from one or more of N, F, S, and Cl.

In this application, the modified compounds of the foregoing materials may be obtained through doping modification and/or surface coating modification to the materials.

In the secondary battery in this application, the positive electrode film layer further optionally includes a binder and a conductive agent.

In an example, the binder for the positive electrode film layer may include one or more of polyvinylidene fluoride (PVDF) and polytetrafluoroethylene (PTFE).

In an example, the conductive agent for the positive electrode film layer may include one or more of superconducting carbon, acetylene black, carbon black, Ketjen black, carbon dots, carbon nanotubes, graphene, and carbon nanofiber.

### [Electrolyte]

The electrolyte conducts ions between the positive electrode plate and the negative electrode plate. The electrolyte is not specifically limited to any particular type and may be selected based on a need. For example, the electrolyte may be selected from at least one of a solid electrolyte and a liquid electrolyte (that is, an electrolyte solution).

In some embodiments, the electrolyte is an electrolyte solution. The electrolyte solution includes an electrolytic salt and a solvent.

In some embodiments, the electrolytic salt may be selected from one or more of LiPF₆ (lithium hexafluorophosphate), LiBF₄ (lithium tetrafluoroborate), LiClO₄ (lithium perchlorate), LiAsF₆ (lithium hexafluoroborate), LiFSI (lithium bis(fluorosulfonyl)imide), LiTFSI (lithium bis-trifluoromethanesulfonimide), LiTFS (lithium trifluoromethanesulfonat), LiDFOB (lithium difluorooxalatoborate), LiBOB (lithium bisoxalatoborate), LiPO₂F₂ (lithium difluorophosphate), LiDFOP (lithium difluorophosphate), and LiTFOP (lithium tetrafluoro oxalate phosphate).

In some embodiments, the solvent may be selected from one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methyl sulfonyl methane (MSM), methyl ethyl sulfone (EMS), and diethyl sulfone (ESE).

In some embodiments, the electrolyte solution further optionally includes an additive. For example, the additive may include a negative electrode film-forming additive, or may include a positive electrode film-forming additive, or may include an additive capable of improving some performance of the battery, for example, an additive for improving overcharge performance of the battery, an additive for improving high-temperature performance of the battery, or an additive for improving low-temperature performance of the battery.

### [Separator]

Secondary batteries using electrolyte solution and some secondary batteries using a solid electrolyte further include a separator. The separator is disposed between the positive electrode plate and the negative electrode plate to provide separation. The separator is not limited to any specific type in this application and may be any well-known porous separator with good chemical stability and mechanical stability.

In some embodiments, a material of the separator may be selected from one or more of glass fiber, non-woven, polyethylene, polypropylene polyethylene, and polyvinylidene fluoride. The separator may be a single-layer thin film or a multilayer composite thin film. When the separator is a multilayer composite thin film, each layer may be made of same or different materials.

In some embodiments, the positive electrode plate, the negative electrode plate, and the separator may be made into an electrode assembly through winding or lamination.

In some embodiments, the secondary battery may include an outer package. The outer package is used for packaging the electrode assembly and the electrolyte.

In some embodiments, the outer package of the secondary battery may be a hard shell, for example, a hard plastic shell, an aluminum shell, or a steel shell. The outer package of the secondary battery may alternatively be a soft pack, for example, a soft pouch. A material of the soft pack may be plastic, for example, one or more of polypropylene (PP), polybutylene terephthalate (PBT), polybutylene succinate (PBS), and the like.

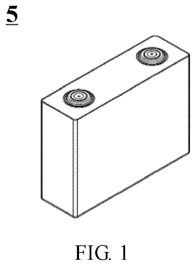

This application does not impose special limitations on a shape of the secondary battery, and the secondary battery may be cylindrical, rectangular, or of any other shapes. FIG 1 shows a rectangular secondary battery 5 as an example.

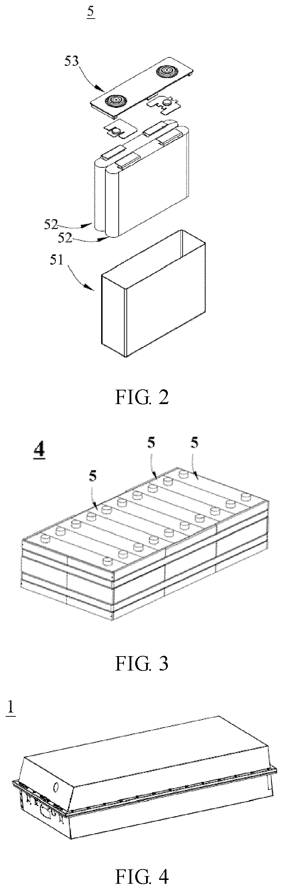

In some embodiments, referring to FIG 2, the outer package may include a housing 51 and a cover plate 53. The housing 51 may include a base plate and side plates connected onto the base plate, and the base plate and the side plates enclose an accommodating cavity. The housing 51 has an opening communicating with the accommodating cavity, and the cover plate 53 is configured to cover the opening to seal the accommodating cavity. The positive electrode plate, the negative electrode plate, and the separator may be made into an electrode assembly 52 through winding or lamination. The electrode assembly 52 is packaged in the accommodating cavity. The electrolyte solution infiltrates the electrode assembly 52. There may be one or several electrode assemblies 52 in the secondary battery 5, and the quantity may be adjusted as required.

In some embodiments, the secondary battery may be assembled into a battery module. The battery module may include a plurality of secondary batteries and a specific quantity may be adjusted based on application and capacity of the battery module.

FIG 3 shows a battery module 4 as an example. Referring to FIG 3, in the battery module 4, a plurality of secondary batteries 5 may be sequentially arranged in a length direction of the battery module 4. Certainly, the secondary batteries 5 may alternatively be arranged in any other manner. Further, the plurality of secondary batteries 5 may be fastened through fasteners.

Optionally, the battery module 4 may further include a housing with an accommodating space, and the plurality of secondary batteries 5 are accommodated in the accommodating space.

In some embodiments, the battery module may be further assembled into a battery pack, and a quantity of battery modules included in the battery pack may be adjusted based on application and capacity of the battery pack.

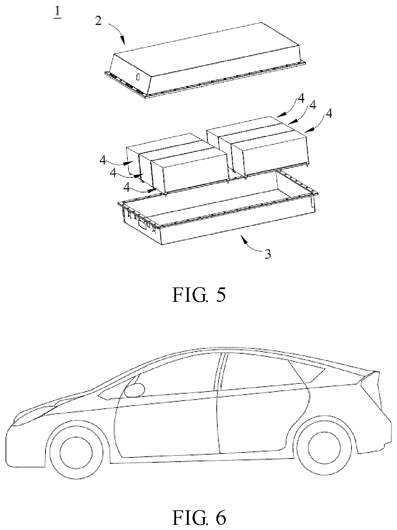

FIG 4 and FIG 5 show a battery pack 1 as an example. Referring to FIG 4 and FIG 5, the battery pack 1 may include a battery box and a plurality of battery modules 4 arranged in the battery box. The battery box includes an upper box body 2 and a lower box body 3. The upper box body 2 is configured to cover the lower box body 3 to form an enclosed space for accommodating the battery modules 4. The plurality of battery modules 4 may be arranged in the battery box in any manner.

### Preparation method of secondary battery

A second aspect of this application provides a preparation method of secondary battery, including preparing a negative electrode plate of the secondary battery according to the following steps:
(1) forming a first negative electrode film layer including a first negative electrode active material on at least one surface of a negative electrode current collector; and
(2) forming a second negative electrode film layer including a second negative electrode active material on the first negative electrode film layer.

The first negative electrode film layer includes the first negative electrode active material and a first conductive polymer, a mass percentage of the first conductive polymer in the first negative electrode film layer is recorded as A, and A≤6%; and the second negative electrode film layer includes the second negative electrode active material and a second conductive polymer, and a mass percentage of the second conductive polymer in the second negative electrode film layer is recorded as B; where A>B.

In the foregoing preparation steps, the first negative electrode film layer and the second negative electrode film layer can be applied at the same time or separately, and preferably, the first negative electrode film layer and the second negative electrode film layer are applied at the same time. The negative electrode film layers being applied at the same time allows for better adhesion between the upper and lower negative electrode film layers to be bonded, helping to further improve cycling performance of the battery.

Except for the preparation method of negative electrode plate in this application, other construction and preparation methods of secondary battery in this application are well known. For example, the positive electrode plate in this application can be prepared by using the following method: mixing and dispersing a positive electrode active material, an optional conductive agent (for example, a carbon material such as carbon black), a binder (for example, PVDF), and the like in a solvent (for example, NMP), stirring the resulting mixture well, and then applying the mixture on a positive electrode current collector, followed by drying, to obtain a positive electrode plate. A metal foil such as an aluminum foil or a material such as a porous metal plate may be used as the positive electrode current collector. In preparation of the positive electrode plate, a positive electrode tab can be obtained by punching or laser die-cutting in an uncoated region of the positive electrode current collector.

Finally, the positive electrode plate, the separator, and the negative electrode plate are stacked in sequence, so that the separator is sandwiched between the positive and negative electrode plates for separation. Then the stack is wound (or laminated) to obtain an electrode assembly. The electrode assembly is placed into an outer package and dried, and the electrolyte solution is injected. After vacuum packaging, standing, formation, shaping, and other processes, a secondary battery is obtained.

### Apparatus

A third aspect of this application provides an apparatus. The apparatus includes the secondary battery according to the first aspect of this application or the secondary battery prepared by using the method according to the second aspect of this application. The secondary battery may be used as a power source of the apparatus or an energy storage unit of the apparatus. The apparatus of this application uses the secondary battery provided in this application, and therefore has at least the same advantages as the secondary battery.

The apparatus may be but is not limited to a mobile device (for example, a mobile phone or a laptop computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, and the like.

A secondary battery, a battery module, or a battery pack may be selected for the apparatus based on requirements for using the apparatus.

FIG 6 shows an apparatus as an example. The apparatus is a battery electric vehicle, a hybrid electric vehicle, a plug-in hybrid electric vehicle, or the like. To meet a requirement of the apparatus for high rate and high energy density of the secondary battery, a battery pack or a battery module may be used.

In another example, the apparatus may be a mobile phone, a tablet computer, a notebook computer, or the like. Such apparatus is usually required to be light and thin and may use a secondary battery as its power source.

The following further describes beneficial effects of this application with reference to examples.

### Examples

Content disclosed in this application is described in detail in the following examples. These examples are intended only for illustrative purposes because various modifications and changes made without departing from the scope of the content disclosed in this application are apparent to those skilled in the art. Unless otherwise stated, all parts, percentages, and ratios reported in the following examples are based on masses, all reagents, first active materials, and second active materials used in the examples are commercially available or synthesized in a conventional manner, and all instruments used in the examples are commercially available.

### I. Preparation method of secondary battery

### Example 1

### (1) Preparation of positive electrode plate

A positive electrode active material LiNi_{0.8}Co_{0.1}Mn_{0.1}O₂ (NCM811), conductive carbon black Super-P, and a binder polyvinylidene fluoride (PVDF) were fully stirred and uniformly mixed in an N-methylpyrrolidone solvent based on a weight ratio of 95:3:2 to obtain a slurry, the slurry was applied onto an aluminum foil substrate, and then processes such as drying, cold pressing, slitting, and cutting were performed to obtain a positive electrode plate. A surface density of a positive electrode film layer was 194 g/m², and a compacted density was 3.4 g/cm³.

### (2) Preparation of negative electrode plate

Step 1. Preparation of negative electrode slurry 1: A first negative electrode active material, a conductive polymer polyaniline PANI, a binder (SBR), a thickener (CMC-Na), and conductive carbon black (Super-P) were mixed at a weight ratio of 89.5:6:2:1:1.5 and fully stirred and mixed in an appropriate amount of deionized water to prepare a negative electrode slurry 1. The first negative electrode active material was artificial graphite, and Dᵥ50 of the first negative electrode active material was 10 µm, BET was 1 m²/g, and powder OI was 4.

Step 2. Preparation of negative electrode slurry 2: A second negative electrode active material, a conductive polymer polyaniline PANI, a binder SBR, a thickener (CMC-Na), and conductive carbon black (Super-P) were mixed at a weight ratio of 91.5:4:2:1:1.5 and fully stirred and mixed in an appropriate amount of deionized water to prepare a negative electrode slurry 2. The second negative electrode active material was artificial graphite, and Dᵥ50 of the second negative electrode active material was 4 µm, BET was 2 m²/g, and a powder OI value was 8.

Step 3. The negative electrode slurry 1 and the negative electrode slurry 2 were simultaneously extruded by using a double-chamber coating device. The negative slurry 1 was applied onto a current collector to form a first negative electrode film layer, and the negative slurry 2 was applied onto the first negative electrode film layer to form a second negative electrode film layer. A surface density of the negative electrode film layer (including the first negative electrode film layer and the second negative electrode film layer) was 118 g/cm², and a compacted density was 1.65 g/cm³.

Step 4. A coating wet film was baked by an oven with different temperature ranges to obtain a dried electrode plate, followed by cold-pressing to obtain the required negative electrode film layer, and then processes such as slitting and cutting were performed to obtain a negative electrode plate.

### (3) Separator

A PE film was used as a separator.

### (4) Preparation of electrolyte

Eethylene carbonate (EC), ethyl methyl carbonate (EMC), and diethyl carbonate (DEC) were mixed at a volume ratio of 1:1:1, and then a fully dried lithium salt LiPF₆ was dissolved in a mixed organic solvent based on a proportion of 1 mol/L to obtain an electrolyte.

### (5) Preparation of battery

The positive electrode plate, the separator, and the negative electrode plate were stacked in sequence and wound to obtain an electrode assembly. The electrode assembly was placed in an outer package, the electrolyte was injected, and processes such as packaging, standing, formation, and aging were performed to obtain a secondary battery.

### Examples 2 to 13 and Comparative Examples 1 to 4

Preparation method of secondary battery in Examples 2 to 13 and Comparative Examples 1 to 4 was similar to the preparation method of secondary battery in Example 1. Table 1 shows different product parameters.

### II. Tests

### 1.Maximum charging rate

At 25°C, the prepared secondary batteries of the examples and comparative examples were fully charged at xC and fully discharged at 1C for 10 times, then the secondary batteries were fully charged at xC, and then the negative electrode plates were taken down for observing lithium precipitation on the surfaces of the negative electrode plates. If no lithium was precipitated on the surface of the negative electrode, the charging rate xC was increased at a gradient of 0.1C for testing, and the test was stopped after lithium was precipitated on the surface of the negative electrode. The charging rate (x-0.1)C at that point was the maximum charging rate of the battery.

### 2. Cycling performance

At 25°C, the prepared secondary batteries of examples and comparative examples were charged to a charge cutoff voltage of 4.2 V at a constant current of 1C, then charged at a constant voltage until current was ≤0.05C, left standing for 5 minutes, then discharged to a discharge cutoff voltage of 2.8 V at a constant current of 0.33C, and left standing for 5 minutes. This was one charge and discharge cycle. The batteries were subject to charge and discharge cycling until the battery capacity was decayed to 80%. The number of cycles at that point was cycle life of the battery at 25°C.

### III. Test Results of Examples and Comparative Examples

The batteries of the examples and comparative examples were prepared according to the foregoing methods, and performance parameters were measured. Results are shown in Table 1.

First, it can be seen from the data in Example 1 and Comparative Example 1 that the secondary battery has both good maximum charging rate and cycling performance only when the first negative electrode active material and the second negative electrode active material both contain a conductive polymer, a mass percentage A of the first conductive polymer is ≤6%, and the mass percentage A of the first conductive polymer in the first negative electrode film layer is greater than a mass percentage B of the second conductive polymer in the second negative electrode film layer.

When the negative electrode active material contains no conductive polymer (Comparative Example 1), the battery has poor maximum charging rate and cycling performance. It can be seen from Comparative Example 4, when the first negative electrode active material and the second negative electrode active material both contain a polymer, but the percentage of the conductive polymer, especially the percentage of the conductive polymer in the first negative electrode film layer, is excessively high, the maximum charging rate and cycling performance of the battery are extremely poor. This is because when the percentage of the conductive polymer is high, dispersibility of the negative electrode active material is poor, and the conductivity of the electrode plate decreases. Moreover, the excessively high percentage of the conductive polymer reduces a weight ratio of a main material, which is not good for increasing the battery capacity.

When the first negative electrode active material and the second negative electrode active material both contain a polymer, but a mass percentage A of the first conductive polymer in the first negative electrode film layer is less than or equal to a mass percentage B of the second conductive polymer in the second negative electrode film layer (Comparative Examples 2 and 3), the battery has poor maximum charging rate and cycling performance. This is because the current density distribution is uneven along the thickness direction of the electrode plate, and kinetic performance decreases in a direction approaching the current collector, so that a greater amount of conductive polymer is needed to improve the performance of the cell.

In addition, it can be seen from Comparative Examples 1 to 11 that when the percentage of the conductive polymer is excessively high or low, the maximum charging rate and cycling performance of the battery are poor. Under the condition that the total percentage of the conductive polymer is the same, the conductive polymer is distributed to different layers. When the mass percentage A of the first conductive polymer is ≤6%, and A is greater than B, a ratio of A to B also has some influence on the performance of the battery. Especially when 1%≤A≤3%, 0.5%≤B≤3%, and 2≤A/B≤5, the maximum charging rate of the battery is greatly increased, and cycling performance of the battery is greatly improved.

Although this application has been described with reference to the preferred examples, various modifications can be made to this application without departing from the scope of this application and the components therein can be replaced with equivalents. In particular, as long as there is no structural conflict, the various technical features mentioned in the examples can be combined in any manner. This application is not limited to the specific examples disclosed in this specification, but includes all technical solutions falling within the scope of the claims.

**Table 1**

| Number | Category of first conductive polymer substance | Mass percentage A of first conductive polymer in first negative electrode film layer | Category of second conductive polymer substance | Mass percentage B of second conductive polymer in first negative electrode film layer | A/B | Maximum charging rate | Cycling performance |
|---|---|---|---|---|---|---|---|
| Example 1 | PANI | 6.0% | PANI | 4.0% | 1.5 | 2.0C | 1600 |
| Example 2 | PANI | 6.0% | PANI | 0.6% | 10.0 | 2.0C | 1590 |
| Example 3 | PANI | 5.5% | PANI | 1.1% | 5.0 | 2.5C | 1810 |
| Example 4 | PANI | 4.4% | PANI | 2.2% | 2.0 | 2.8C | 1980 |
| Example 5 | PANI | 3.4% | PANI | 3.2% | 1.1 | 2.3C | 1750 |
| Example 6 | PANI | 4.0% | PANI | 3.0% | 1.3 | 2.5C | 1790 |
| Example 7 | PANI | 4.0% | PANI | 2.0% | 2.0 | 2.4C | 1770 |
| Example 8 | PANI | 3.6% | PANI | 0.4% | 9.0 | 2.5C | 1830 |
| Example 9 | PANI | 3.7% | PANI | 0.3% | 12.3 | 2.2C | 1700 |
| Example 10 | PANI | 3.0% | PANI | 1.0% | 3.0 | 2.8C | 2000 |
| Example 11 | PANI | 2.5% | PANI | 1.5% | 1.7 | 2.5C | 1800 |
| Example 12 | PANI | 3.0% | PEDTO | 1.0% | 3.0 | 2.7C | 1980 |
| Example 13 | PEDTO | 3.0% | PANI | 1.00% | 3.0 | 2.7C | 1950 |
| Comparative Example 1 | / | / | / | / | / | 1.3C | 1100 |
| Comparative Example 2 | PANI | 2.0% | PANI | 2.0% | 1.0 | 1.8C | 1550 |
| Comparative Example 3 | PANI | 1.0% | PANI | 3.0% | 0.3 | 1.6C | 1300 |
| Comparative Example 4 | PANI | 6.1% | PANI | 3.9% | 1.6 | 1.8C | 1550 |

## Claims

1. A secondary battery, comprising a negative electrode plate, wherein the negative electrode plate comprises:
a negative electrode current collector;
a first negative electrode film layer disposed on at least one surface of the negative electrode current collector, wherein the first negative electrode film layer comprises a first negative electrode active material and a first conductive polymer, a mass percentage of the first conductive polymer in the first negative electrode film layer is recorded as A, and A≤6%; and
a second negative electrode film layer disposed on a surface of the first negative electrode film layer, wherein the second negative electrode film layer comprises a second negative electrode active material and a second conductive polymer, and a mass percentage of the second conductive polymer in the second negative electrode film layer is recorded as B; wherein
the negative electrode plate satisfies A>B.

2. The secondary battery according to claim 1, wherein 1%≤A≤5%, and optionally 1%≤A≤3%.

3. The secondary battery according to claim 1 or 2, wherein B≤4%, and optionally 0.5%≤B≤3%.

4. The secondary battery according to any one of claims 1 to 3, wherein A/B≤10, and optionally A/B≤5.

5. The secondary battery according to any one of claims 1 to 4, wherein the first conductive polymer and the second conductive polymer are independently selected from one or more of polyaniline, polypyrrole, polythiophene and derivatives thereof, poly(3,4-ethylenedioxythiophene), polyacetylene, polyphenylene, and polyphenylacetylene.

6. The secondary battery according to any one of claims 1 to 5, wherein the first active material and the second negative electrode active material both comprise artificial graphite.

7. The secondary battery according to any one of claims 1 to 6, wherein a median particle size by volume Dᵥ50 of the first negative electrode active material is greater than a median particle size by volume Dᵥ50 of the second negative electrode active material.

8. The secondary battery according to any one of claims 1 to 7, wherein the median particle size by volume Dᵥ50 of the first negative electrode active material is 6 µm to 15 µm, and optionally 8 µm to 12 µm; and/or
the median particle size by volume Dᵥ50 of the second negative electrode active material is 0.5 µm to 8 µm, and optionally 4 µm to 6 µm.

9. The secondary battery according to any one of claims 1 to 8, wherein a specific surface area (SSA) of the first negative electrode active material is less than a specific surface area (SSA) of the second negative electrode active material.

10. The secondary battery according to any one of claims 1 to 9, wherein the specific surface area (SSA) of the first negative electrode active material is 0.5 m²/g to 2 m²/g, and optionally 1 m²/g to 1.5 m²/g; and/or
the specific surface area (SSA) of the second negative electrode active material is 1.5 m²/g to 5 m²/g, and optionally 2 m²/g to 3 m²/g.

11. The secondary battery according to any one of claims 1 to 10, wherein an OI value of the first negative electrode active material is greater than an OI value of the second negative electrode active material.

12. The secondary battery according to any one of claims 1 to 11, wherein the OI value of the first negative electrode active material is 4 to 20, and optionally 5 to 10; and/or
the OI value of the second negative electrode active material is 0.5 to 10, and optionally 1 to 4.

13. The secondary battery according to any one of claims 1 to 12, wherein thickness of the first negative electrode film layer is recorded as H1, thickness of the second negative electrode film layer is recorded as H2, and the secondary battery satisfies 0.5≤H1/H2≤3, and optionally 0.8≤H1/H2≤1.5.

14. The secondary battery according to any one of claims 1 to 13, wherein
the thickness of the first negative electrode film layer is recorded as H1, and 20 µm≤H1≤110 µm; and/or
the thickness of the second negative electrode film layer is recorded as H2, and 20 µm≤H2≤110 µm.

15. The negative electrode plate according to any one of claims 6 to 14, wherein the first negative electrode active material and/or the second negative electrode active material further comprise(s) one or more of natural graphite, hard carbon, and silicon-based material.

16. An electric apparatus, containing the secondary battery according to any one of claims 1 to 15.
